# EUROPÄISCHE PATENTSCHRIFT

(11) **EP 0 933 533 B1**
(45) Veröffentlichungstag und Bekanntmachung des Hinweises auf die Patenterteilung: **02.07.2003**
(21) Anmeldenummer: 99101416.8
(22) Anmeldetag: 27.01.1999
(51) Int. Cl.: F04D 15/00, F16K 1/226

(54) **Kreiselmotorpumpe mit Absperrklappen**
Centrifugal pump with butterfly valves
Pompe centrifuge avec des vannes papillon

(30) Priorität: 28.01.1998 DE 19803162
(43) Veröffentlichungstag der Anmeldung: 04.08.1999
(73) Patentinhaber: WILO AG, 44263 Dortmund (DE)
(72) Erfinder: Kaul, Günter, 58456 Witten (DE)
(74) Vertreter: COHAUSZ DAWIDOWICZ HANNIG & PARTNER

(56) Entgegenhaltungen:
- DE-A- 2 944 763
- DE-A- 3 502 258
- DE-A- 4 401 658
- GB-A- 2 206 672
- US-A- 2 649 049
- US-A- 3 784 157
- US-A- 5 466 995

## Beschreibung

Die Erfindung betrifft eine Kreiselmotorpumpe mit im Saugund Druckstutzen angeordneten Absperrklappen, wobei das Innere des jeweiligen Stutzens im Bereich der Klappe von einer Dichtmanschette ausgekleidet ist.

Kreiselmotorpumpen mit im Einlaß- und Auslaßstutzen angeordneten Absperrklappen sind aus der US-A-5 466 995, US-Patentschrift 2649049 und der deutschen Offenlegungsschrift 4401658 bekannt. Aus der letzteren Schrift ist zudem bekannt, die Klappe von einer Dichtmanschette zu umgeben, die am Ende des Stutzens einliegt. Hierbei hat es sich gezeigt, daß eine ausreichende Dichtigkeit zum Flansch der am Stutzen zu befestigenden Rohrleitung nicht immer erreicht wird.

Aufgabe der Erfindung ist es, eine Pumpe der eingangs genannten Art so zu verbessern, daß sie bei einfacher Herstellung und Montage eine hohe Stabilität und Dichtigkeit im Bereich der Stutzen erzielt und hierbei eine leichte Drehbeweglichkeit der Klappen erhalten bleibt.

Diese Aufgabe wird erfindungsgemäß dadurch gelöst, daß in der Dichtmanschette ein ringförmiger Metalleinsatz koaxial einliegt, der einen mittleren Bereich des zylindrischen Manschettenaußenmantels bildet und mit einer Spielpassung am Stutzeninneren anliegt.

Der Metalleinsatz gibt der Dichtmanschette eine hohe Stabilität und erhöht dadurch die Dichtsicherheit der Manschette. Hierbei kann für eine besonders leichtgängige Lagerung der die Absperrklappe bewegenden Welle bzw. Verstellbolzen gesorgt werden.

Eine besonders hohe Leichtgängigkeit der Verstellbolzen wird dann erreicht, wenn der Metalleinsatz von dem Verstellbolzen der Klappe zumindest auf einer Seite durchdrungen ist und hierzu der Metalleinsatz ein Langloch bildet, dessen Erweiterung dem Stutzenende zugewandt ist. Hierbei kann beliebig stark durch den Flansch des anliegenden Rohres auf die Dichtmanschette gedrückt werden, da der Druck von dem Metalleinsatz abgefangen wird, insbesondere aufgrund des langen Loches.

Eine besonders einfache Demontage der Bolzen wird dann erreicht, wenn zumindest einer der die Drehverstellung der Klappe erzeugenden Bolzen an seinem außen vorstehenden freien Ende einen Kopf bildet. Hierbei kann der Kopf einen Sechskant bilden, so daß ein Drehwerkzeug, insbesondere ein Hebel oder ein Schlüssel zur Betätigung der Klappe leicht ansetzbar ist. Dies ist insbesondere dann von Vorteil, wenn die Klappen nur dazu dienen, den Stutzen entweder vollständig zu öffnen oder vollständig zu verschließen, da Zwischenstellungen der Klappen nicht erforderlich sind, weil die Pumpe nicht durch die Klappen, sondern insbesondere elektronisch über den Elektromotor geregelt wird.

Hierbei ist auch von Vorteil, wenn der Kopf einen Anzeigepfeil aufweist, der die jeweilige Stellung der Klappe (AUF/ZU) anzeigt.

Ein ausreichend hoher Dichtdruck wird von dem Flansch des anzuschließenden Rohres auf die Dichtmanschette dann ausgeübt, wenn die Dichtmanschette auf der äußeren Stirnseite, die dem anzuschließenden Rohr zugewandt ist, einen koaxialen Ringwulst aufweist, der über die Dichtfläche der Stutzenflanschfläche nach außen vorragt.

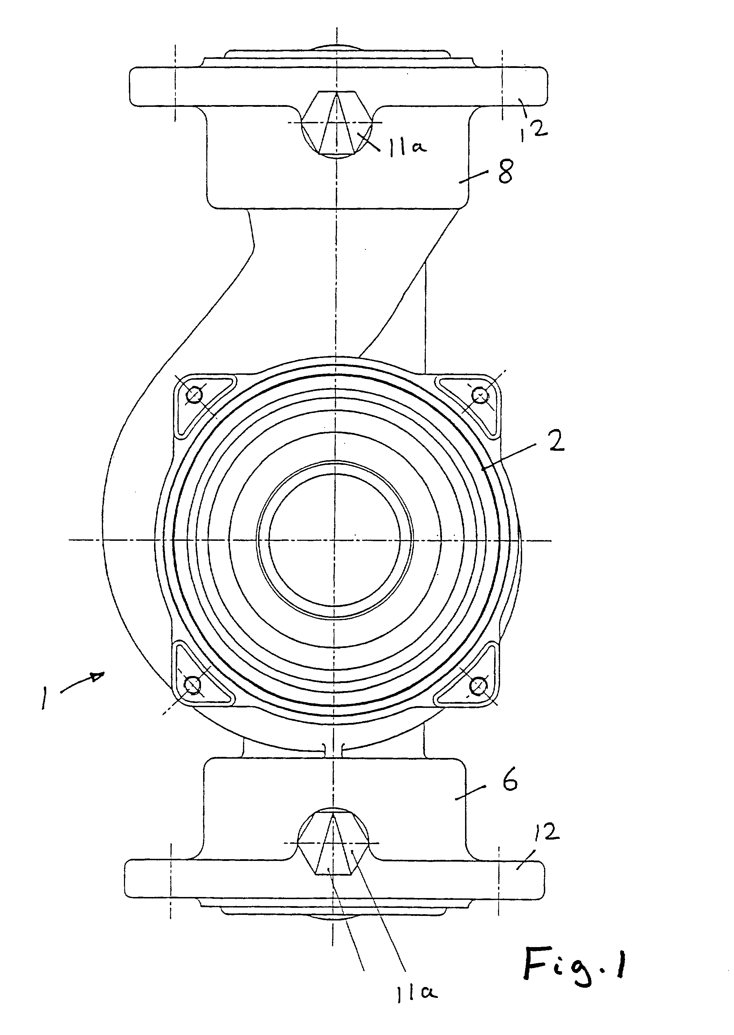

Ein Ausführungsbeispiel der Erfindung ist in den Zeichnungen dargestellt und wird im folgenden näher beschrieben. Es zeigen
- Fig. 1: eine Seitenansicht der Kreiselmotorpumpe und

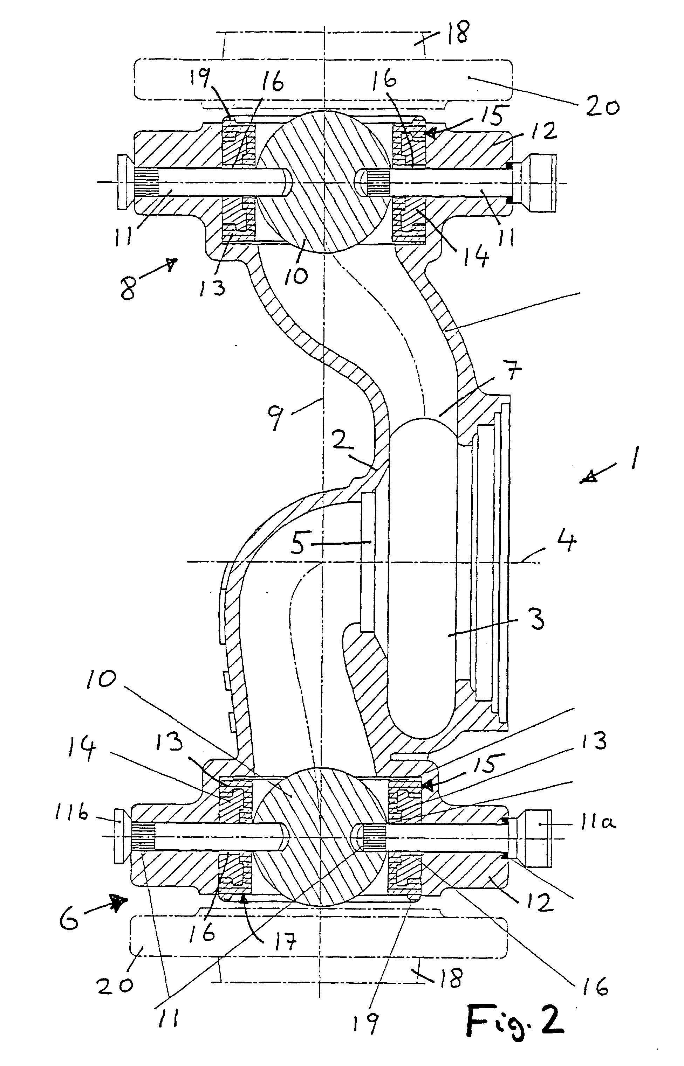

- Fig. 2: einen Schnitt durch die Kreiselmotorpumpe.

Die Kreiselmotorpumpe 1 weist ein Pumpengehäuse 2 auf, das eine Pumpenkammer 3 bildet, in dem ein nicht dargestelltes Laufrad gelagert ist und hierzu weist das Laufrad koaxial zu einer Achse 4 eine Welle auf, die von einem Elektromotor angetrieben ist, der am Gehäuse 2 angeflanscht ist. Welle und Elektromotor sind nicht dargestellt.

Die Pumpenkammer 3 besitzt einen koaxialen Einlaß, auf der dem Elektromotor abgewandten Seite, der mit dem Saugstutzen 6 verbunden ist. Ferner besitzt die Pumpenkammer 3 einen Auslaß 7, der zu einem Druckstutzen 8 führt. Saugstutzen 6 und Druckstutzen 8 liegen auf derselben Achse 9.

Im Saugstutzen 6 und im Druckstutzen 8 ist jeweils ein Klappenventil mit einer drehverstellbaren Klappe 10 befestigt, an der diametral gegenüberliegend zwei Verstellbolzen 11 befestigt sind, deren Drehachse rechtwinklig zur Stutzenachse 9 liegt und diese schneidet.

Beide Verstellbolzen sind im Flansch 12 des jeweiligen Stutzens geführt und ragen außen am Umfang des Flansches hervor. Dort bilden die Verstellbolzen Köpfe 11a und 11b, wobei ein Kopf 11a als Haltebolzen ausgeführt ist mit einer Fase für ein Demontagewerkzeug und der andere Kopf 11b als Verstellbolzen mit einem Positionspfeil, einer Fase für ein Demontagewerkzeug und einem äußeren Sechskant für ein Verstellwerkzeug.

Beide Klappen sind jeweils von einer Dichtmanschette 13 umgeben, die koaxial im Stutzenende einliegt und von außen eindrückbar ist. In der Dichtmanschette liegt ein ringförmiger Metalleinsatz 14 ein, der einen mittleren Bereich des zylindrischen Manschettenaußenmantels 15 bildet und eine Spielpassung zum Stutzeninneren aufweist. Der ringförmige Metalleinsatz 14 ist somit auf beiden Stirnseiten und auf der Innenseite und damit der Klappe 10 zugewandt vom Kunststoff der Dichtmanschette 13 umgeben. Nur auf der Außenseite ist der Metalleinsatz 14 frei, um dort mit Spielpassung an der Innenseite des Stutzens anzuliegen.

Dichtmanschette 13 und Metalleinsatz 14 sind jeweils von den Verstellbolzen 11 auf diametral gegenüberliegenden Seiten durchdrungen, so daß an diesen Stellen die Dichtmanschette und der Metalleinsatz entsprechend große Bohrungen aufweisen. Die Bohrungen 16 des Metalleinsatzes 14 sind hierbei erweitert, das heißt größer ausgeführt als der Außendurchmesser der Verstellbolzen 11, so daß zumindest ein größeres Spiel besteht. Vorzugsweise ist die Bohrung 16 als Langloch ausgeführt, das zum Stutzenende hin erweitert ist, um einen von außen auf die Dichtmanschette 13 ausgeübten Druck aufnehmen zu können, ohne daß es zu einer Klemmkraft zwischen Metalleinsatz 14 und Verstellbolzen 11 kommt.

Die Dichtmanschette 13 weist auf der äußeren Stirnseite 17, die dem anzuschließenden Rohr 18 zugewandt ist, einen koaxialen Ringwulst 19 auf, der über die Dichtfläche der Stutzenflanschfläche nach außen hervorragt. Dieser Ringwulst 19 wird von dem Flansch 20 des Rohres 18 druckbeaufschlagt, wenn der Flansch 20 an dem Flansch des Stutzens angeschraubt wird. Hierbei wird auf die Dichtmanschette 13 über den Ringwulst 19 ein Druck ausgeübt, der sich auf dem Metalleinsatz auswirkt und hierbei das Langloch 16 etwas zusammendrückt, ohne aber eine Klemmkraft auf die Verstellbolzen 11 ausüben zu können.

## Patentansprüche

1. Kreiselmotorpumpe (1) mit im Saug- (6) und Druckstutzen (8) angeordneten Absperrklappen (10), wobei das Innere des jeweiligen Stutzens im Bereich der Klappe (10) von einer Dichtmanschette (13) ausgekleidet ist, **dadurch gekennzeichnet, daß** in der Dichtmanschette (13) ein ringförmiger Metalleinsatz (14) koaxial einliegt, der einen mittleren Bereich des zylindrischen Manschettenaußenmantels (15) bildet und mit einer Spielpassung am Stutzeninneren anliegt.

2. Kreiselmotorpumpe nach Anspruch 1, **dadurch gekennzeichnet, daß** der Metalleinsatz (14) von dem Verstellbolzen (11) der Klappe (10) zumindest auf einer Seite durchdrungen ist und hierzu der Metalleinsatz (14) ein Langloch (16) bildet, dessen Erweiterung dem Stutzenende zugewandt ist.

3. Kreiselmotorpumpe nach Anspruch 1 oder 2, **dadurch gekennzeichnet, daß** zumindest einer der die Drehverstellung der Klappe (10) erzeugenden Bolzen (11) an seinem außen vorstehenden freien Ende einen Kopf (11a, 11b) bildet.

4. Kreiselmotorpumpe nach Anspruch 3, **dadurch gekennzeichnet, daß** der Kopf (11b) einen Sechskant bildet.

5. Kreiselmotorpumpe nach Anspruch 3 oder 4, **dadurch gekennzeichnet, daß** der Kopf (11b) einen Anzeigepfeil aufweist.

6. Kreiselmotorpumpe nach einem der vorherigen Ansprüche, **dadurch gekennzeichnet, daß** die Dichtmanschette (13) auf der äußeren Stirnseite (17), die dem anzuschließenden Rohr (18) zugewandt ist, einen koaxialen Ringwulst (19) aufweist, der über die Dichtfläche der Stutzenflanschfläche nach außen vorragt.

## Claims

1. Centrifugal pump (1) with butterfly valves (10) arranged in the suction (6) and pressure pipes (8), in which the inside of the relevant pipe is lined by a sealing sleeve (13) in the area of the valve (10), **characterised by** the fact that a ring shaped metal insert (14) lies coaxially in the sealing sleeve (13), which forms a middle area of the cylindrical outer cover of the sleeve (15) and lies on the inside of the pipe with a clearance fit.

2. Centrifugal pump according to claim 1, **characterised by** the fact that the metal insert (14) is penetrated by the adjusting bolt (11) of the valve (10) on at least one side and for this the metal insert (14) forms an elongated hole (16), the extension of which faces the pipe end.

3. Centrifugal pump according to claim 1 or 2, **characterised by** the fact that at least one of the bolts (11) producing the turning adjustment of the valve (10) forms a head (11a, 11b) on the free end protruding towards outside.

4. Centrifugal pipe according to claim 3, **characterised by** the fact that the head (11b) forms a hexagon.

5. Centrifugal pump according to claim 3 or 4, **characterised by** the fact that the head (11b) has an indicator arrow.

6. Centrifugal pump according to one of the previous claims, **characterised by** the fact that the sealing sleeve (13) on the outside face (17), which faces the pipe to be connected (18), has a coxial annular ring (19), which extends over the sealing surface of the pipe flange surface towards the outside.

## Revendications

1. Moto-pompe centrifuge (1) avec des clapets d'arrêt (10) disposés dans les tubulures d'aspiration (6) et de pression (8), l'intérieur de la tubulure respective étant revêtu dans la zone du clapet (10) d'une manchette d'étanchéité (13),
**caractérisée en ce qu'**un insert métallique (14) annulaire est logé coaxialement dans la manchette d'étanchéité (13), lequel forme une zone centrale de l'enveloppe extérieure (15) cylindrique de la manchette et est en appui sur l'intérieur de la tubulure avec un ajustement avec jeu.

2. Moto-pompe centrifuge selon la revendication 1,
**caractérisée en ce que** l'insert métallique (14) est traversé au moins d'un côté par l'axe de déplacement (11) du clapet (10) et l'insert métallique (14) forme à cet effet un trou oblong (16) dont l'extension est tournée vers l'extrémité de la tubulure.

3. Moto-pompe centrifuge selon la revendication 1 ou 2,
**caractérisée en ce qu'**au moins un des axes (11) engendrant le déplacement en rotation du clapet (10) forme une tête (11a, 11b) à son extrémité libre en saillie extérieurement.

4. Moto-pompe centrifuge selon la revendication 3,
**caractérisée en ce que** la tête (11b) forme un hexagone.

5. Moto-pompe centrifuge selon la revendication 3 ou 4,
**caractérisée en ce que** la tête (11b) présente une flèche indicatrice.

6. Moto-pompe centrifuge selon l'une des revendications précédentes,
**caractérisée en ce que** la manchette d'étanchéité (13) présente, sur la face frontale (17) extérieure qui est tournée vers le tube (18) à raccorder, un bourrelet annulaire (19) coaxial qui fait saillie vers l'extérieu au-dessus de la surface d'étanchéité de la surface de flasque de la tubulure.
